Europäisches Patentamt

European Patent Office

Office européen des brevets

(11) Publication number: 0 351 837
A2

# (12) EUROPEAN PATENT APPLICATION

(21) Application number: 89113311.8

(22) Date of filing: 20.07.89

(51) Int. Cl.4: G11B 21/00 , G11B 5/48 , //G11B5/58

(30) Priority: 21.07.88 US 223606

(43) Date of publication of application:
24.01.90 Bulletin 90/04

(84) Designated Contracting States:
BE DE FR GB IT LU NL SE

(71) Applicant: INSITE PERIPHERALS, INC.
2363 Calle del Mundo
Santa Clara, Cal. 95054(US)

(72) Inventor: Williams, Roger O.
47267 Rancho Higuera
Fremont, CA 94539(US)
Inventor: Williams, Stephen P.
764 North Fourth Street
San Jose, CA 95112(US)

(74) Representative: Blumbach Weser Bergen
Kramer Zwirner Hoffmann Patentanwälte
Radeckestrasse 43
D-8000 München 60(DE)

(54) Read/write head slider with medium access aperture.

(57) A read/write head slider for use with a disk drive, such as a floppy disk drive for a microcomputer, in which an aperture extends through the width of the head. The aperture allows access to the medium underneath the head which is being held relatively rigid by the head. Optical or electrical components can be positioned in or around the aperture, for example, to read optical servo tracking data from the medium.

Fig_1

EP 0 351 837 A2

## Read/Write Head Slider With Medium Access Aperture

### BACKGROUND OF THE INVENTION

#### Field of the Invention

The present invention relates to the read/write head slider of a disk drive system and more particularly to a read/write head having an aperture extending through the width of the head for accessing the underlying medium.

#### Description of the Prior Art

The track density of magnetic storage disks for conventional floppy disk drives is approximately forty-eight to one hundred thirty-five tracks per inch (TPI). In contrast, optical disk drives are capable of achieving track densities in excess of 15,000 TPI. These higher track densities are achieved through the use of closed loop optical servos that allow the read/write head to follow data track eccentricities caused by defects in the medium and by disturbances from outside forces. In rigid type magnetic disk drives, track densities of up to 1500 TPI are presently used. These drives commonly have multiple disks in which both sides are used for data. To achieve the high track density a dedicated surface of one of the disks is used for magnetic track servo information. This surface is then not usable for data storage. Thus, the total capacity of the drive is lessened. The tracking servo information is also capable of being accidentally erased causing loss of access of all data.

Various techniques have been reported for using optical means for acquiring track following servo information contained on a magnetic recording medium. For example, Ahn, et al in U.S. Patent 4,633,451, issued on December 30, 1986, for "Optical Servo For Magnetic Disks", disclose the use of a laser diode to read track following servo information in the form of a plurality of spots contained in an optical layer positioned above a magnetic recording layer.

DiStefano, et al, in U.S. Patent 4,570,191, issued on February 11, 1986, for "Optical Sensor for Servo Position Control", disclose a servo sensor comprising a light source and a light detector, axially aligned and contained on a single semiconductor chip.

M. Johnson, in U.S. Patent 4,558,383, issued on December 10, 1985, for "Information Storage Disk Transducer Position Control System Using a Prerecorded Servo Pattern Requiring No Alignment With the Storage Disk", discloses a servo apparatus having a sensor for detecting a pattern of spots on a surface of an information storage medium. The spots comprise a dense array of substantially translation invariant marks and separate information recording tracks are detected by measuring the rate at which the spots are detected by the sensor.

J. Cocke, et al, in U.S. Patent 4,587,579, issued on May 6, 1986, for "System for Position Detection on a Rotating Disk", disclose a servo control system comprising a detector for reading a plurality of spiral radial-position-encoding patterns on a medium.

A.S. Hoagland in "Optical Servo of Magnetic Recording", IBM Technical Disclosure Bulletin, Vol. 20(10), page 4108 (March 1978), suggests a system for achieving optical servo control where a flexible disk medium includes a plurality of optical servo tracks positioned underneath a magnetic layer.

D.A. Thompson, et al in "Embossed Servo Techniques For Floppy Disks", IERE Conference Proceedings, No. 43, p. 321 (July 1979), suggests the use of embossed marks on flexible magnetic media for obtaining non-magnetic optical or capacitive servo information.

N. Koshino and S. Ogawa in "Optical Method of the Head Positioning in Magnetic Disk Systems", preprint from IEEE Transactions on Magnetics (1980), disclose an optical head for achieving track following servo control which is mounting on the head arm and which includs an LED light source and three optical fibers for delivering light to a medium. The medium comprises a plurality of circular optical tracks, dyed black, and located underneath a magnetic film.

Related work has occurred in the laser video disk area, from which optical disks for digital data storage and the audio laser disk (CD) have evolved. Fundamentally, the optical servo information is inscribed and used in the same way for all these disks. A mastering machine is used to format optical information onto a master disk. The master is then replicated to form the actual disk used by the customer. A laser and associated optics are used to acquire the mastered servo information as well as read data from the disk. The data can be inscribed during the mastering process as with the video and audio disks or it can be written by the read/write laser as in disks for digital information storage.

None of the prior art cited above discloses a means for accessing the region of the medium that falls within the confines of the perimeter and thus covered by the read/write head.

## SUMMARY OF THE INVENTION

It is therefore an object of the present invention to provide a read/write head for a disk drive system in which the medium underneath the read/write head is accessible from outside the head.

It is another object of the present invention to provide a read/write head that allows access to a region of the medium that is relatively rigid.

It is another object of the present invention to provide a read/write head that minimizes the reading and writing error between the upper and lower heads.

It is another object of the present invention to provide a read/write head that maximizes the amount of medium surface area usable for information storage.

Briefly, a preferred embodiment includes a read/write head for a disk drive of an information storage system, such as a microcomputer, having an aperture extending through the width of the head. Typically, an upper head and a lower head are used together, with one head located on the upper and lower faces of a section of an information storage medium, such as a flexible magnetic disk. Either one or both of the heads can include the aperture.

The aperture provides access to the section of the medium lying underneath the head. The force exerted on the medium by the head holds the medium relatively rigid in the vicinity of the aperture. Additionally, when an upper and lower head are used, the error between the two heads in reading or writing is minimized because hygroscopic or thermal expansion of the medium causes equal offsets to occur in the upper and lower heads.

A plurality of optical or electrical components can be positioned in or around the aperture. For example, a light source, such as a light emitting diode, and a light detector could be positioned in or around the aperture for reading optical servo information from the medium. This configuration maximizes the amount of usable medium surface area because extra medium is not required for writing surface information.

An advantage of the present invention is that the aperture in the read/write head provides access to the medium underneath the head.

Another advantage of the present invention is that the medium accessible underneath the head is held relatively rigid by the head.

Another advantage of the present invention is that the reading and writing error between the upper and lower heads is minimized.

Another advantage of the present invention is that the amount of usable medium surface area is maximized.

These and other objects and advantages of the present invention will no doubt become obvious to the those of ordinary skill in the art after having read the following detailed description of the preferred embodiment which is illustrated in the various drawing figures.

## IN THE DRAWINGS

Fig. 1 is a top elevational view of a read/write head slider having a medium access aperture in accordance with the present invention;

Fig. 2 is a cross-sectional view of the read/write head slider taken along the line 2-2 of Fig. 1;

Fig. 3 is a top elevational view of the read/write head slider with optical components positioned around the medium access aperture; and

Fig. 4 is a top elevational view of the read/write head slider with the optical components positioned inside the medium access aperture.

## DETAILED DESCRIPTION OF THE PREFERRED EMBODIMENT

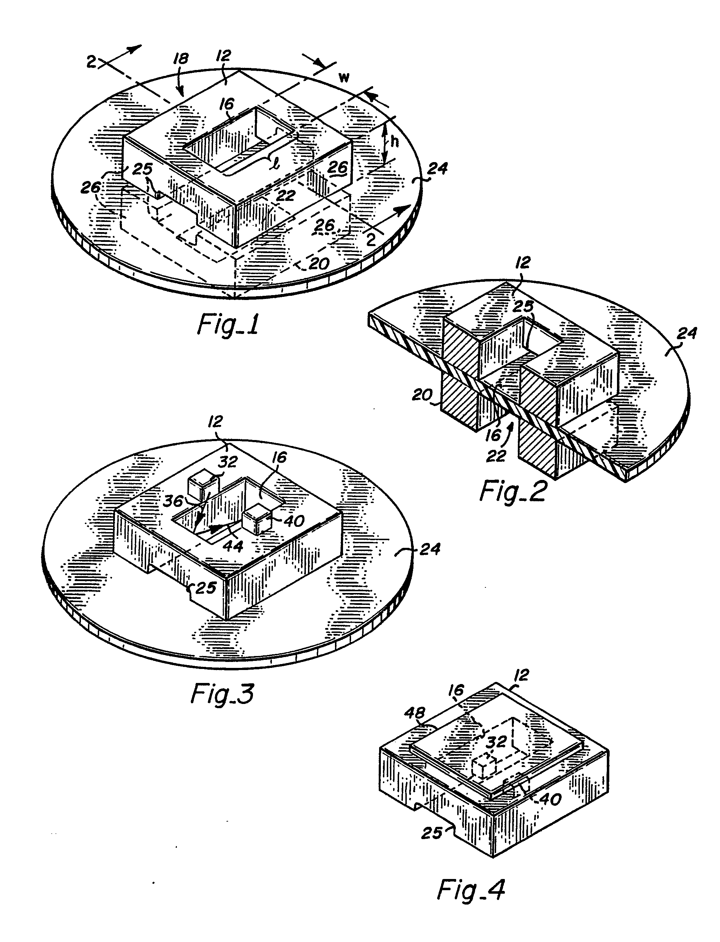

Fig. 1 shows an upper read/write head slider 12 for an information storage device disk drive system containing a centrally located aperture 16. The information storage device could be, for example, the flexible disk drive of a microcomputer. The configuration of the read/write head 12 containing the aperture 16 is referred to as a hole-in-the-head configuration 18. A lower read/write head slider 20 which can include a lower head aperture 22 is positioned on the opposite side of a recording medium 24 from the upper head 12. In the preferred embodiment, the aperture 16 is centered around the approximate geometric center of the head 12 and extends completely through a width "h" of the head 12 thus providing a passageway between the upper and lower faces of the head 12 to the recording medium 24 at a location within the outer perimeter of the head 12. The shape of the aperture 16 is shown as being rectangular, but this shape is irrelevant and any other geometric shape, e.g. a circle or triangle or an irregular shape would suffice. The rectangular aperture 16 has a length "l" and a width "w". The width "h" of the head 12 is also the height of the aperture 16. Typically, "l" is approximately 0.140 inches, "w" is approximately 0.050 inches and "h" is approximately 0.060 inches. A plurality of notches 25 may be located on a plurality of faces 26 of the upper and lower heads 12 or 20 which do not include the apertures 16 or 22.

The lower read/write head 20 is substantially identical to the upper head 12 and may contain the lower head aperture 22. It should be noted that in some disk drive systems, the heads 12 and 20 are "read only" heads or "write only" heads. For purposes of the present invention, it is irrelevant if the read/write heads 12 and 20 perform both the read and write function (i.e. dual function head) or only one of these functions (i.e. single function head).

Hereafter, it should be understood that the word "head" refers to both single function and dual function heads. Additionally, it is not essential that the lower head 20 include the aperture 22.

In the preferred embodiment, the medium 24 is a magnetic medium such as a flexible or hard magnetic disk (i.e. floppy or Winchester disks). With a magnetic medium, the heads 12 and 20 must be magnetic read/write heads.

Fig. 2 shows a cross-sectional view of the heads 12 and 20 taken along the line 2-2 of Fig. 1. The apertures 16 and 22 provide a location for viewing the surface of the medium 24 that is otherwise covered by the heads 12 and 20 respectively. Various optical or electrical components can be positioned in or near the apertures 16 and 22. For example, Fig. 3 shows a light source 32, such as a light emitting diode or a laser, positioned to shine a beam of light 36 through the aperture 16. A detector 40 is positioned to receive a beam of light 44 reflected from the surface of the medium 24. In the situation where both the upper head 12 and the lower head 20 contain apertures, the light source 32 could be positioned in the aperture 16 and the detector could be positioned in the aperture 22.

Fig. 4 shows that the light source 32 and the detector 40 may also be positioned on the head 12 at a location inside the aperture 16 or at a location within the head 12 and with openings on the aperture 16. A cover 48 is used to restrict access to the aperture 16, for example, when the light source 32 is located inside the aperture 16. The cover 48 can be a separate piece from the head 12 which sits on the head 12 and covers the aperture 16 or which fits tightly inside the aperture 16. Alternatively, the cover 48 could be an integral part of the head 12 which essentially prevents the aperture 16 from extending completely through the width "h" of the head 12. In this case, the aperture 16 is said to extend substantially through the width of the head 12. Additionally, other optical components, such as fiber optic cables, or other electrical components, such as a capacitance measuring device, could be located in or around the aperture 16.

The light source 32 and the detector 40 may be used, for example, to read servo-tracking information on the surface of the medium 24. In this application, the hole-in-the-head configuration 18 provides several advantageous features. First, the surface of the medium 24 that is exposed by the aperture 16 is held relatively flat by the head 12. In the case of a flopy disk drive the medium 24 is held flat because while one head, e.g. head 12, is rigidly fixed, the other head, e.g. head 20, is allowed to comply to the fixed head. A load $P_1$ is applied to head 20, thus pinching the medium 24 between the two heads. In a Winchester Drive, the medium is rigid and the heads are loaded and allowed to comply to the medium. Holding the medium 24 flat is important because it allows the distance between the medium 24 and the optic or capacitive devices located around the aperture 16 to be tightly controlled. If this distance were to vary, the optics, for example, would go out of focus. In contrast, the surface of the medium 24 outside the head 12 is free to vibrate or deform. This is particularly true with flexible magnetic media. Second, without the aperture 16, the surface of the medium 24 that is covered by the head 12 is neither visible nor accessible. Third, when the upper and lower heads 12 and 20 are utilized, the surface of the medium 24 exposed by the apertures 16 and 22 is at the geometric center point between the upper and lower heads 12 and 20. This means that if distortions occur in the medium 24, they are minimized by the configuration 18. For example, if thermal or hygroscopic expansion of the medium 24 occurs, the offset from the upper head 12 to servo tracking information on the surface of the medium 24 is equal to the corresponding offset between the lower head 20 and the servo tracking information. Fourth, the hole-in-the-head configuration 18 maximizes the amount of medium surface area usable for information writing. If the light source 32 and detector 40 are located outside the head 12, extra medium surface area would be required for writing servo information.

The apertures 16 and 22 may be prepared by several methods. For example, a precision drill may be used to drill a hole in an assembled head. Alternatively the pieces of an unassembled head could be designed so that the apertures 16 and 22 would be part of the assembled head configuration.

Although the present invention has been described in terms of the presently preferred embodiment, it is to be understood that such disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

Claims

1. A head for a disk drive system having an aperture extending substantially through a width of the head whereby access may be gained to an information carrying medium at a location within the perimeter of the head.

2. A head for a disk drive system comprising:
a head for reading information contained on an information carrying medium with an aperture extending completely through a width of the head whereby access may be gained to the medium at a location within the perimeter of the head.

3. The head of claim 2 wherein,
the head is capable of both reading and writing information on said medium.

4. The head of claim 2 wherein,
said aperture has a rectangular shape.

5. The head of claim 2 wherein,
said medium is a magnetic medium.

6. The head of claim 5 wherein,
said magnetic medium comprises a flexible magnetic disk.

7. The head of claim 5 wherein,
said magnetic medium comprises a rigid magnetic disk.

8. The head of claim 2 further comprising:
a cover positioned on a surface area of the head containing at least part of said aperture whereby access to said aperture is restricted.

9. The head of claim 2 further comprising:
a plurality of optical components located in close physical proximity to said aperture.

10. The head of claim 9 wherein,
the plurality of optical components comprises a light source.

11. The head of claim 10 wherein,
said light source comprises a light emitting diode.

12. The head of claim 2 further comprising:
a plurality of electrical components located in close physical proximity to said aperture.

13. The head of claim 12 wherein,
the plurality of electrical components comprises a means for measuring capacitance.

14. A method for reading servo-tracking information on a magnetic medium comprising the steps of:
    a. positioning a light source near an aperture in a head of a disk drive system;
    b. directing a ray of light from the light source through said aperture to a region of a magnetic medium within a perimeter of said head; and
    c. detecting the ray of light with a detector after the ray of light encounters said magnetic medium.

15. The method of claim 14 further including the steps of:
    a. positioning said detector near said aperture prior to detecting the ray of light; and
    b. directing the ray of light back to said aperture prior to detecting the ray of light.

Fig_1

Fig_2

Fig_3

Fig_4